# EUROPEAN PATENT APPLICATION

(11) **EP 4 560 650 A1**
(43) Date of publication of application: **28.05.2025**
(21) Application number: 23307061.4
(22) Date of filing: 27.11.2023
(51) Int. Cl.: H01B 7/02, H01B 7/282, H01B 13/26, H02G 15/18

(54) **A METHOD FOR PRODUCING A POWER CABLE WITH A WATER BARRIER AND A METHOD FOR JOINTING A FIRST AND SECOND POWER CABLE**

(71) Applicant: Nexans, 92400 Courbevoie (FR)
(72) Inventor: MAURI, Massimiliano, 1739 Borgenhaugen (NO); JOHANSON, Audun, 0653 Oslo (NO)
(74) Representative: Onsagers AS

(57) **Abstract**

A method for producing a power cable 100 with a water barrier (130) comprises the steps of:
a) providing at least one cable core (125) comprising an electrical conductor (110),
b) applying a metal sheath (131) onto the at least one cable core (125),
c) applying (atmospheric) plasma (145) to the surface of the metal sheath (131), and
d) applying a polymeric sheath (132) to the outer surface of the metal sheath (131).

A method for jointing a first and second power cable (100), comprises the steps of:
A) providing the first and second power cables (100), each cable comprising at least one cable core (225, 325),
B) joining the at least one cable core (225) of the first power cable with the at least one cable core (325) of the second power cable, forming at least one section (J) of joint cable core,
C) applying a metal sheath (131) onto the at least one section (J) of joint cable core,
D) applying (atmospheric) plasma (145) to the surface of the metal sheath (131), and
E) applying a polymeric sheath (132) to the outer surface of the metal sheath (131).

## Description

### Field of the invention

The present invention relates to a method for producing a power cable with a water barrier, especially a water barrier for a subsea power cable. More specifically, the invention relates to applying a water barrier on a power cable. The present invention further relates to a method for jointing a first and second power cable.

### Background

Intrusion of humidity or water may cause electrical breakdown of the power cable insulation system.

The core section of power cables is therefore usually protected by a water barrier arranged radially around the cable core. Up to date, the dominating material in water barriers for power cables is lead since lead has proven to be a reliable and sturdy sheathing material. A conventional water barrier sheathing is typically manufactured by a continuous or discontinuous extrusion of a seamless tube, and often comprises lead or lead alloys due to their extrudability and high ductility.

HV subsea power cables operating > Um 72.5 kV are required to be dry, and they are normally sheathed with a lead water barrier at > 36 kV as recommended by IEC 60840. Lead sheathing has been under scrutiny and there is a push to ban it in 5 years' time. Also, lead sheath as radial water barrier in dynamic cables is less favorable because the material has poor fatigue properties.

There is thus a need for alternative water barriers that uses other materials than lead.

Generally, the motivations in the development of a replacement of the lead as water barrier are:
1 - The environmental aspect;
2 - To reduce the weight and thus increase the freight/transport capacity;
3 - To reduce the mechanical tension and strain during lay out;
4 - To find a construction that can withstand dynamic mechanical stresses for floating installations such as offshore windmills.

Several solutions for providing water barriers to submarine power cables are known, but all have various disadvantages that should be overcome. One drawback is that lead is a high-density material adding significant weight to the cable. The heavy weight induces extra costs in the entire value chain from production, under transport, storage, deployment, and when the cable is discarded after reaching its lifetime. Another drawback is that lead has a relatively low fatigue resistance making leaden water barriers less suited for dynamical power cables. Furthermore, lead is a rather poisonous material increasingly meeting environmental regulation restrictions. An environmentally friendly replacement of lead as water barrier in power cables is required. Finally, longitudinally welded sheaths are difficult to weld in a continuous way guaranteeing that no holes are present in the weld. A single hole present would result in water rushing through the gap rendering the barrier ineffective.

A known alternative to lead screens is the use of high resistance metallic screens or metal polymer laminates arranged outside the cable core. The cable core includes all elements that are within the water barrier, and may therefore include an electrically insulating system, strengthening elements, semi-conducting layers, etc., arranged radially outside of the electrical conductor.

These screen types have a high per-unit-length resistance, which is excellent for cables in operation as induced currents are small and hence also the losses occurring in them. However, these alternative water barriers still have an unacceptable risk of failure for example because it is difficult to identify defects in production (pinholes in the metal, bad adhesion between the layers, insufficient melting of the polymeric layers to seal the construction etc.)

EP2812457 describes a non-magnetic stainless-steel wire with an adherent corrosion resistant coating. The non-magnetic stainless-steel wire is used as a armouring wire for a power cable for transmitting electrical power. The surface of the non-magnetic stainless-steel is pre-treated so as to be sufficiently free from oxides and form a good adhesion with the above corrosion resistant coating.

US2015348677 describes a cable with one example having a jacket layer surrounding an armor layer, where the jacket layer can be a plastic jacket or similar coating. Prior to applying additional layers around first armor layer 22, first armor layer 22 can be cleaned using a plasma cleaning method to improve adhesion of the polymer to the wires.

The object of the present invention is to solve some of these drawbacks, or at least to improve on existing solutions.

The object of the invention is achieved by means of the patent claims.

### Summary of the invention

A method for manufacturing a power cable with a water barrier comprises in a first aspect the steps of:
a) providing at least one cable core comprising an electrical conductor,
b) applying a metal sheath to the at least one cable core,
c) applying plasma, preferably atmospheric plasma, to the surface of the metal sheath, and
d) applying a polymeric sheath to the outer surface of the metal sheath.

A method for jointing a first and second power cable comprises in a first aspect the steps of:
A) providing the first and second power cables (100), each cable comprising at least one cable core (225, 325),
B) joining the at least one cable core (225) of the first power cable with the at least one cable core (325) of the second power cable, forming at least one section (J) of joint cable core,
C) applying a metal sheath (131) onto the at least one section (J) of joint cable core,
D) applying plasma (145), preferably atmospheric plasma, to the surface of the metal sheath (131), and E) applying a polymeric sheath (132) to the outer surface of the metal sheath (131).

Between step C) and step D) a step CD) may be added that comprises joining the metal sheath (131) to the metal sheaths (231,331) of the first and a second power cables (100).

It should be noted that the metal sheath is the water barrier, while the polymeric sheath provides mechanical support to the water barrier.

The term cable core should in this description be understood to comprise all elements that are within the water barrier, and may therefore include an electrically insulating system, strengthening elements, semi-conducting layers, etc., arranged radially outside of the electrical conductor.

Plasma is charged particles. The electrical charged particles strongly interact with surface contaminants and leave the surface clean. Surface treatment using atmospheric plasma has been industrialized with several applications like improving the performance of solar cells and activating surfaces for cell culture.

Plasma cleaning advantages:
- Remove any foreign material from the surface of the base material
- Enhances material characteristics without affecting the bulk properties
- Increases surface cleanliness before extruding the polymeric adhesive, very important to ensure proper adhesion
- A fast and accurate process without any biproducts
- An environmentally friendly process

In an embodiment, the polymeric sheath is made of electrically semi-conductive polymeric material.

The polymeric sheath may in some embodiments comprise an adhesive.

The polymeric sheath can be applied by extrusion or by lapping polymer tapes continuously onto the metal sheath and thereafter heating the polymer tapes to a fusing temperature at which temperature the polymer tape fuses together to form a continuous sheath, or any other suitable method.

In one embodiment the polymeric sheath comprises multiple layers.

The fusing temperature should in this description be understood as a temperature at which temperature the polymer tape or polymer layers fuses together to form a continuous sheath.

In one embodiment, the method comprises, before applying a polymeric sheath, a step of heating the metal sheath to a temperature of >150°C by means of induction heating or air heating.

The metal sheath and can be made of exogenous or autogenously welded Al-, Cu- or Fe alloy, such as for example Cu-Ni alloy.

The metal sheath, when applied onto the cable core, can be welded, or otherwise treated to form a continuous metal barrier around the at least one cable core.

In one embodiment, the polymeric sheath comprises at least two layers, where the two layers are made of (i) an adhesive, (insulating or semiconductive) polyethylene based polymer, and a (ii) thermoplastic polyolefin material (insulating or semiconductive) such as LDPE, MDPE, HDPE, PP, or other olefin-based polymeric material, and where the layers are co-extruded on the metal sheath.

In an embodiment, the water barrier further comprises an adhesive layer laid onto the inner and/or on the outer surface area of the metal sheath.

In an embodiment, the adhesive layer covers from 5 to 95 % of the inner and/or of the outer surface area of the metal sheath.

### Short description of the drawings

In the following description this invention will be further explained by way of exemplary embodiments shown in the drawings:
Fig. 1 is a cross section of a cable with water barrier.
Fig. 2 is a side view of a power cable core and a metal sheet.
Fig. 3 is a side view of the metal sheet applied around the power cable core.
Fig. 4 is a side view of the power cable with a water barrier layer after application of a polymeric sheath to the outer surface of the metal sheath.
Fig. 5a is a side view of two power cable cores to be joined.
Fig. 5b is a side view of two joined power cable cores and a metal sheet.
Fig. 6 is a side view of the metal sheet applied on the two power cable cores after joining.
Fig. 7 is a side view of the power cable with a water barrier layer after application of a polymeric sheath to the outer surface of the metal sheath.

### Detailed description of the invention

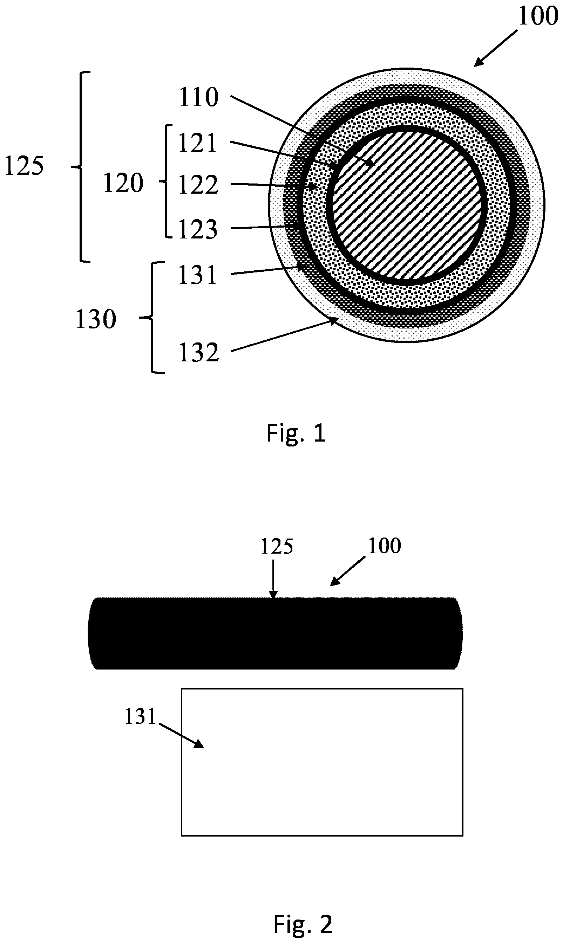

Figure 1 shows a cross section of a power cable 100 with a water barrier 130 around a cable core 125. The cable core is in this figure illustrated somewhat schematically, and it should be noted that the method according to the invention can be employed to any cable core in any power cable that needs water protection.

In fig. 1, it is shown that the cable core 125 comprises an electrical conductor 110 and an electrically insulating system 120 that is arranged radially outside the electrical conductor 110. The electrical conductor 110 is illustrated as one single conductor, but in other configurations, there may be more than one electrical conductor, such as for example a three-phase power cable with three electrical conductors.

The insulating system 120 here comprises
- an inner layer 121 made of a first semiconducting material for surrounding the electric conductor 110,
- an intermediate insulating layer 122 made of an insulating material, covering an external surface of the inner semiconducting layer 121,
- an outer layer 123 made of a second semiconducting material, covering an external surface of the insulating layer 122.

In other embodiments, other insulating systems may be provided, with other layers and/or compositions, but the method for applying a water barrier will be the same.

The water barrier 130 comprises a metal sheath 131 and a polymeric sheath 132, arranged outside the metal sheath 131.

A method for applying a water barrier 130 on a power cable 100 is illustrated in fig. 2 to fig. 7.

Fig. 2 illustrates the first step in the method; providing at least one cable core 125 comprising an electrical conductor 110. The cable core 125 is illustrated schematically and may for example comprise an electrical conductor 110 and an insulating system 120 as described above. A metal sheath 131 is provided to serve as a part of the water barrier 130.

The metal sheath 131 can for example be made of exogenous or autogenously welded Al-, Cu- or Fe alloy, for example a Cu-Ni alloy.

The invention is not tied to use of any specific metal/metal alloy or thickness of the metal sheath. Any metal/metal alloy at any thickness known to be suited for use in water barriers in power cables by the skilled person may be applied. In one example embodiment, the metal sheath is made of either an Al/Al-alloy such as for example an AA1xxx series, an AA5xxx series or an AA6xxx series alloy according to the Aluminium Association Standard, or a Cu/Cu-alloy such as for example pure Cu, a CuNi-alloy or a CuNiSi-alloy, or a Fe/Fe-alloy, such for example stainless alloy SS316 or S32750. The thickness of the metal sheath may in an example embodiment be in one of the following ranges; from 10 to 250 µm, preferably from 15 to 200 µm, more preferably from 20 to 150 µm, more preferably from 25 to 100 µm, and most preferably from 30 to 75 µm.

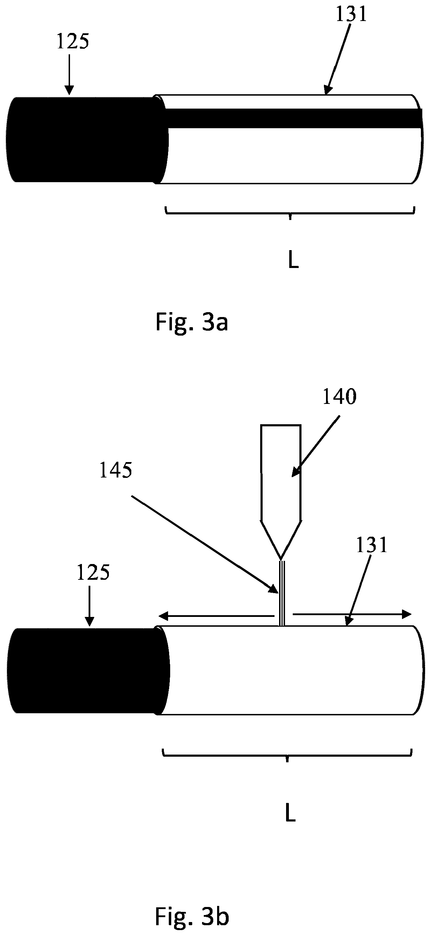

The metal sheath is then applied radially to at least a sub-length L of the at least one cable core as shown in figure 3a to form a continuous metal barrier around the length of the at least one cable as shown in figure 3b.

In an embodiment, the metal sheath may alternatively be deposited by chemical, electro-chemical or a direct energy technique- including but not limited to electrodeposition, physical vapor deposition, chemical vapor deposition or similar.

When adding the polymer sheath onto the metal sheath, adhesion is a critical factor in order to ensure mechanical support during bending. Surface preparation is an important tool to improve adhesion and ensure proper contact between the polymer and metal layer.

The surface preparation may include several cleaning steps, but at least one such cleaning step is using plasma treatment equipment 140 to apply plasma 145 to the surface of the metal sheath 131.

Plasma cleaning is the removal of impurities and contaminants from the metallic surface without having a negative impact on other properties of the surface. In addition, the plasma treatment alters the surface energy which increases the wettability of the surface so that bonding or adhesion to other surfaces (the jointing process later) enhances.

Plasma is charged particles. The electrical charged particles strongly interact with surface contaminants and leave the surface clean.

The plasma treatment can be employed in an open environment or non-sealed chamber where a low pressure of a suitable gas can be sustained. A flow rate of oxygen, argon or helium at 0.1- 1 mbar in the chamber where a glow discharge RF generator operating in 10- 15 MHz using 10- 1,000 W power. [C Mandolfini, 2015] demonstrated that the adhesive strength for aluminium could be dramatically increased. Increased adhesive strength means that the minimum bending radius can be reduced for a given LWS design.

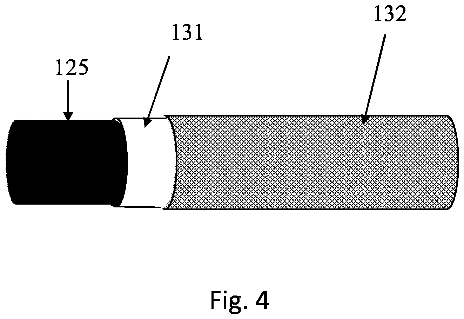

After this step, a polymeric sheath 132 comprising of one or more polymer layers is added to the outer surface of the metal barrier, as shown in figure 4. The polymeric sheath is for example extruded on top of the metallic sheath. In the case of more than one polymer layer, the layers can be fused together after all layers are in place by heating the polymer layers to a temperature where the polymer fuses together to form an integrated layer.

Another method for adding the polymeric sheath 132 can be lapping polymer tapes continuously onto the metal sheath and thereafter heating the polymer tapes to over a temperature at which temperature the polymer tape fuses together to form a continuous sheath.

The polymeric sheath can comprise an adhesive. The invention may apply any adhesive known to the skilled person being suited for attaching a polymer layer to a metal surface. Examples of suited adhesives includes, but is not limited, to; epoxy resins, phenolic resins, polyurethane based adhesives, cyanoacrylates, acrylic adhesives, polyester based adhesives, copolymer of ethylene and ethyl acrylate, copolymer of ethylene and ethyl acrylic acid, methacrylic acid, copolymer of ethylene and glycidyl methacrylate or epoxy-based monomer such as 1,2-epoxy-1-butene, and copolymer of ethylene and maleic-anhydride. The above-mentioned adhesives may be applied with or without electrically conductive particulates providing the adhesive an enhanced electric conductivity.

The adhesive and/or polymeric sheath may in one example embodiment be made electrically semi-conducting by addition and homogenisation of 4 to 40 weight% particulate carbon, silver or aluminium in the polymer mass to enable carrying away capacitive charges. Examples of suited particulate carbon includes but is not limited to: comminuted petrol coke, comminuted anthracite, comminuted char coal, carbon black, carbon nanotubes, etc.

The polymeric sheath can for example be constituted of one of:
1- An adhesive semiconductive polyethylene-based polymer, extruded on top of the longitudinally welded metallic sheath. The polymer sheathing can be made of electrically semi-conductive (adhesive) polymeric material.
2- A double layer, constituted of (i) an adhesive (insulating or semiconductive) polyethylene based polymer, and a (ii) thermoplastic polyolefin material (insulating or semiconductive) such as LDPE, MDPE, HDPE, PP, or other olefin-based polymeric material, co-extruded on top of the longitudinally welded metallic sheath.

The polymeric sheath may also have more than two layers, depending on the type of power cable and the intended use of the power cable.

In order for the polymer sheath to have sufficient adhesion to the metallic layer, it can be extruded at high temperatures > 150 °C, and the metallic surface must be pre-heated at > 150 °C after plasma cleaning. This can be achieved by induction heating or by air heating. The sheathing is of sufficient thickness to guarantee the necessary mechanical stability.

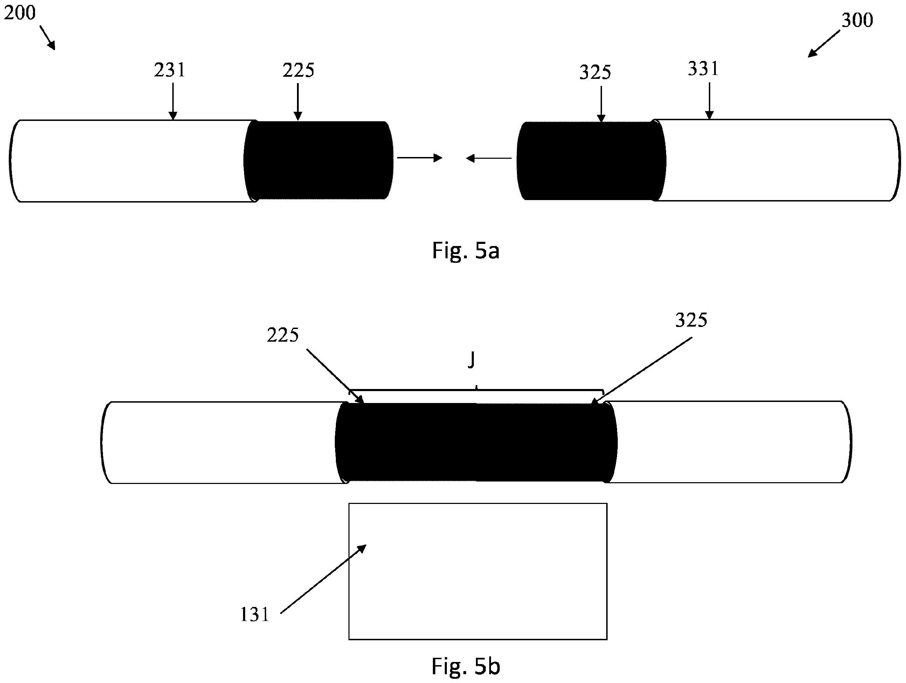

Fig. 5a and 5b illustrates a similar method, but instead of applying a water barrier to one single cable, a joint between two cable cores 225, 325 is protected against water penetration by adding a water barrier onto the joint. The two cable cores 225, 325 are each comprised in a first and second cable 200, 300, and each of the first and second cable 200, 300 comprises a metal sheath 231, 331 around the respective cable cores 225, 325. As figure 5a illustrates, before adding the water barrier, the two cable cores are joined, thereby creating a joint section J of joint cable core.

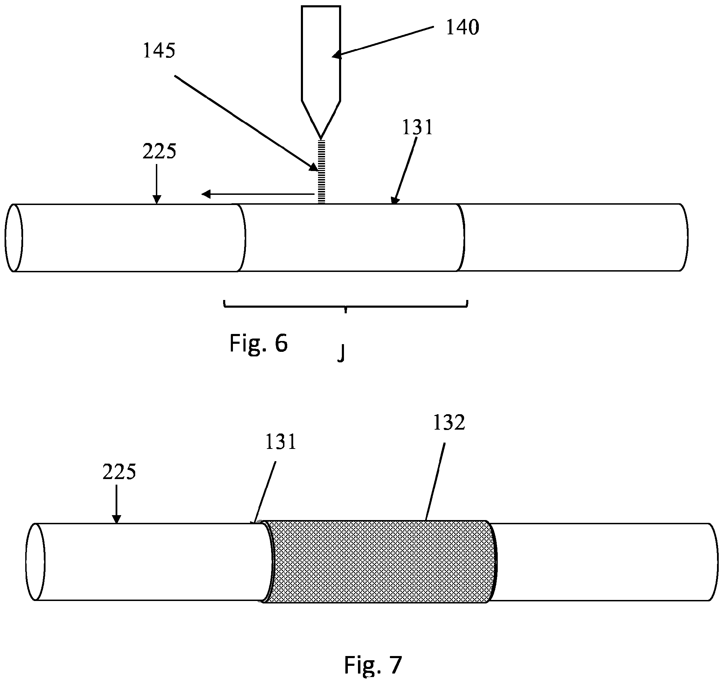

Similar to the method described above, a metal sheath 131 is then applied radially to the section J of joint cable core as shown in figure 6 to form a continuous metal barrier around the section J of joint cable core.

This metal sheath 131 can be applied for example in form of a longitudinally welded sheath (LWS) or a tubular metallic shape that is drawn down onto the joint. The diameter of the welded sheath can then be reduced by either drawing or rolling.

The metal sheath 131 surrounding the section J of joint cable core is then welded or jointed to the metal sheaths 231, 331 of the two cable cores of the first and second cables 200, 300, thus forming a continuous metal sheath.

As described above, a plasma treatment device 140 is used to direct plasma 145 to the surface of the metal sheath, before a polymeric sheath 132 comprising of one or more polymer layers is added to the outer surface of the metal sheath as shown in figure 7. The polymeric sheath is for example extruded on top of the metallic sheath as described above.

## Claims

1. Method for producing a power cable 100 with a water barrier (130), wherein the method comprises the steps of:
a) providing at least one cable core (125) comprising an electrical conductor (110),
b) applying a metal sheath (131) onto the at least one cable core (125),
c) applying plasma (145), preferably atmospheric plasma to the surface of the metal sheath (131), and
d) applying a polymeric sheath (132) to the outer surface of the metal sheath (131).

2. Method for jointing a first and second power cable (100), comprising the steps of:
A) providing the first and second power cables (100), each cable comprising at least one cable core (225, 325),
B) joining the at least one cable core (225) of the first power cable with the at least one cable core (325) of the second power cable, forming at least one section (J) of joint cable core,
C) applying a metal sheath (131) onto the at least one section (J) of joint cable core,
D) applying plasma (145), preferably atmospheric plasma to the surface of the metal sheath (131), and
E) applying a polymeric sheath (132) to the outer surface of the metal sheath (131).

3. Method according to claim 1 or 2, wherein the polymeric sheath (132) is made of electrically semi-conductive polymeric material.

4. Method according to any one of the previous claims, wherein the polymeric sheath (132) comprises an adhesive.

5. Method according to any one of the previous claims wherein the polymeric sheath (132) is applied by extrusion.

6. Method according to any one of the previous claims, wherein the polymeric sheath (132) comprises multiple layers.

7. Method according to claim 6, wherein the polymeric sheath (132) comprises at least two layers, where the two layers are made of (i) an adhesive, preferably insulating or semiconductive, polyethylene based polymer, and a (ii) thermoplastic polyolefin material, preferably insulating or semiconductive, such as LDPE, MDPE, HDPE, PP, or other olefin-based polymeric material, and where the layers are co-extruded on the metal sheath.

8. Method according to any of the previous claims, further comprising, before applying a polymeric sheath (132) to the outer surface of the metal sheath (131) a step of heating the metal sheath (131) to a temperature of >150°C by means of induction heating or air heating.

9. Method according to any one of the previous claims, wherein the metal sheath (131) is made of exogenous or autogenously welded Al-, Cu- or Fe alloy.

10. Method according to any one of the previous claims, wherein the polymeric sheath (132) is applied by lapping polymer tapes continuously onto the metal sheath and thereafter heating the polymer tapes to over a temperature at which temperature the polymer tape fuses together to form a continuous sheath.

11. Method according to one of claims 2-10, where the first and second power cables comprises a metal sheath (232), the method further comprising, between step C) and step D) a step CD) of
- joining the metal sheath (131) to the metal sheaths (231,331) of the first and a second power cables (100).

12. A power cable (100) with a water barrier (130) comprising at least one cable core (125) comprising an electrical conductor (110),
a metal sheath (131) radially arranged around the at least one cable core (125),
a polymeric sheath (132) radially arranged around the outer surface of the metal sheath (131), wherein the outer surface of the metal sheath (131) has been treated with application of plasma.

13. A power cable (100) with a water barrier, wherein the power cable is manufactured by means of any one of the claims 1-11.
